# EUROPEAN PATENT SPECIFICATION

(11) **EP 2 218 692 B1**
(45) Date of publication and mention of the grant of the patent: **14.09.2016**
(21) Application number: 10151917.1
(22) Date of filing: 28.01.2010
(51) Int. Cl.: C03B 37/018

(54) **APPARATUS FOR MANUFACTURING GLASS MATERIAL**
VORRICHTUNG ZUR HERSTELLUNG VON GLASMATERIAL
APPAREIL POUR LA FABRICATION D'UN MATÉRIAU À BASE DE VERRE

(30) Priority: 16.02.2009 FI 20095142
(43) Date of publication of application: 18.08.2010
(73) Proprietor: Optogear Oy, 02230 Espoo (FI)
(72) Inventor: Mattila, Timo, FI-02230 Espoo (FI)
(74) Representative: Heinänen Oy Patent Agency

(56) References cited:
- FR-A1- 2 569 180
- FR-A1- 2 691 144
- JP-A- S5 747 736
- JP-A- S53 133 045
- JP-A- 2003 238 191
- JP-A- 2004 051 464
- US-A- 4 838 915
- US-A1- 2006 112 734

## Description

### Background of the invention

The object of the invention is an apparatus for manufacturing glass material as defined in the preamble of claim 1.

The invention relates generally to the manufacturing of glass material and more particularly to the manufacturing of doped glass material.

Doped glass material is used e.g. in the manufacture of optical waveguides. Optical waveguide refers to an element intended to convey optical power. The manufacture of optical fibres comprises the making of a glass preform, during which time the optical properties of the fibre are determined, and the drawing of the glass preform into an optical fibre.

Prior-art methods for manufacturing fibre preforms are OVD (Outside Vapour Deposition), VAD (Vapour Axial Deposition), MCVD (Modified Chemical Vapour Deposition), PCVD (Plasma Activated Chemical Vapour Deposition) and DND (Direct Nanoparticle Deposition). The OVD, VAD and MCVD methods are based on the use of materials that possess a high vapour pressure at room temperature in the preform phase, in which liquid is vapourized into carrier gas, which is then transported into a thermal reactor. In the reactor the vapourized raw materials react with oxygen to form oxides. The oxide particles grow as a result of agglomeration and sintering and they are driven onto a collection surface, where they form a porous glass layer of glass particles. The porous glass layer can later be sintered into solid glass. The main raw material of quartz glass is silicon tetrachloride SiCl4. Other typical raw materials are germanium tetrachloride GeCl4, which increases the refractive index, and phosphoric acid trichloride POCl3, which decreases the viscosity of glass and thus facilitates sintering.

A problem with MCVD, OVD and VAD methods is that they cannot be used for the manufacture of optic fibres doped with rare earth minerals. Rare earth metals do not have any practical compounds with a vapour pressure that would be sufficiently high at room temperature.

For manufacturing optic fibres doped with rare earth minerals it is prior art to use a so-called solution doping method in which the fibre preform grown from the basic materials is soaked in a solution containing dopants and after that is sintered. A problem with fibre preforms manufactured with the solution doping method is poor homogeneousness and poor repeatability between fibre preforms. This is because penetration of the liquid into the pores, the deposition of salts onto the surface of the material, the penetration of gases, the reaction of salts, etc, are factors that are difficult to control.

The manufacture with so-called Direct Nanoparticle Deposition, DND, of fibres doped with rare earth metals is known from publication WO 0020346. In the DND method liquid raw materials can be fed into a reactor, in which case the glass particles are doped in a flame reactor. In this way a glass preform grown from deposited glass particles is obtained, which is of more uniform quality than when manufactured with solution doping. A drawback of the DND method, however, is that it cannot be used together with the common and, in terms of investment costs, inexpensive MCVD method.

Publications FI 117243 B and FI 119028 B disclose the doping with an ALD (Atomic Layer Deposition) method of the porous inner surface of a glass tube that has been manufactured with an MCVD method. ALD is a CVD (Chemical Vapour Deposition) method, in which dopants are led to a substrate one at a time. With the ALD method, dopants can be added with atomic scale precision. Thus with the ALD method, the dopants can be grown onto the surface of the porous glass material very accurately. Since the layer thickness of the dopant in the ALD method is very thin, i.e. on the atomic scale, the surface area of the substrate must be large in a fibre manufacturing application for a viable process speed to be achieved. For this reason, the substrate tube used in an MVCD process is preferably of large internal diameter. In addition, it is preferable that the porous glass material on the inner wall of the tube is formed from small particles so that the specific surface area of the material forms to be large. In addition, the ALD process requires raising the temperature of the tube to approx. 300 degrees along essentially the whole length of the fibre preform.

US 4 838 915 A discloses a method for preheating a substrate tube to 1000-1500 °C by gas flame and then doing final collapse by microwave energy. This invention enables collapse of substrate tube by microwave energy, which is used as heat source in PCVD process, but which alone would not be powerful enough for substrate tube collapsing. As the tube is preheated to 1000-1500 °C temperature by flame, only limited amount of energy is necessary to supply by microwaves to reach 2200 °C temperature. Significant benefit of this invention is the reduced temperature gradient over the substrate tube wall thickness during collapsing process compared to collapse by flame. Another benefit is that collapsing can be done in PCVD equipment without removing the substrate tube prior to collapse. Removing substrate tube before collapsing would expose the tube to contamination. This invention does not however offer means for substrate tube temperature control in MCVD process, or ALD process, where the tube temperatures needed are in range of few hundred °C and the requirement of the temperature control accuracy is far greater than in the collapsing process.

MCVD is the most commonly used process for manufacturing a fibre preform owing to its simplicity and to its low investment costs. A number of deficiencies, however, are connected to an MCVD process, which make its economic utilization and e.g. the application of the ALD method described above difficult.

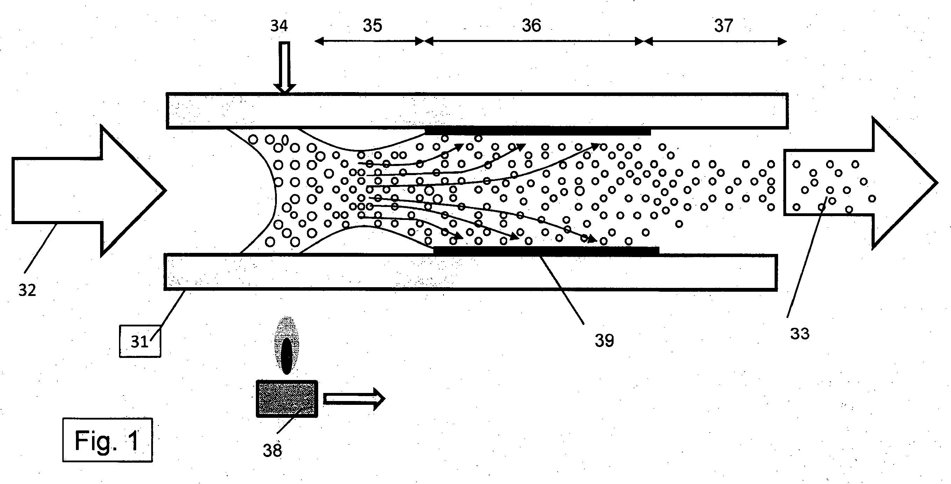

One central weakness of the MCVD method is the inadequate power of the hydrogen/oxygen burner conventionally used, and also weak adjustability. Owing to the inadequate power, the heat transfer through the wall of the substrate tube remains weak, which results in large granular size in the deposition process. Large granular size weakens the uniform quality of the fibre preform being manufactured as a function of the length of the axis of the preform, impairs sintering and unnecessarily increases the thermal resistance of the tube. In particular, the inadequacy of the power of the hydrogen / oxygen burner becomes apparent in the collapsing stage of the tube. Owing to the aforementioned reasons, the size of the substrate tube used is limited typically to an outer diameter of less than 30 mm. In addition, the management of the temperature of the glass tube that functions as a reaction chamber causes imprecision in the properties of the fibre preform being manufactured. In the MCVD method, silicon particles affix to the wall of the tube under the effect of thermophoresis after the particles have formed under the effect of heat from the vapours fed into the tube. Thermophoresis is a phenomenon, under the effect of which hot particles move towards cold surfaces. Deposition in the MCVD process occurs in that part of the tube in which the temperature of the particles is greater than the temperature of the tube. The strength of the thermophoresis as well as the distance over which deposition occurs depend on the temperature difference between the hot zone of the tube and the parts of the tube behind the hot zone. For this reason, from the viewpoint of the process good control of the temperature of the tube is a very important aspect. From the viewpoint of the process, it is preferable that at the point of each respective power source the temperature difference between the hot zone of the tube and the part of the tube behind it is as constant as possible. The larger the temperature difference of the hot part and the cold part of the tube, the stronger is the thermophoresis, on which affixing of the particles is based. Figure 1 presents by illustrating with the aid of a simplified diagram the growing of glass particles under the effect of thermophoresis.

With a CVD oven the problems connected to the inadequate power of a hydrogen / oxygen burner as well as to difficult adjustability and measurability can be solved. A CVD oven is a heat source that is narrow in shape, typically approx. 200 mm in width, comprising holes and through which the substrate tube travels. Owing to its high power and adjustment accuracy, a CVD oven is used as a heat source in some MCVD processes. As the CVD oven travels along the substrate tube, each respective narrow part of the tube, typically approx. 50 mm, in the centre of the oven will be in the heat zone of the oven. The temperature of the heat zone of the CVD oven is typically approx. 2000 degrees. New problems, however, are attached to use of the oven, of which one is the rapid return of the oven to the start end of the fibre preform after the deposition layer becomes finished. If the return movement of the oven is not sufficiently fast, the result is that for a relatively long distance on the start end of the fibre preform the refractive index profile is not of the type desired and a so-called ramp forms that is too long from the viewpoint of viable manufacturing and only a part of the fibre preform can be utilized in the manufacturing of optic fibre. If, on the other hand, the oven is returned quickly to the start end of the fibre preform, oxygen often manages to enter the oven, the result of which is burning of the hot parts of the oven as the fast movement allows air to displace the shielding gas curtain inside the oven.

In addition, the oven cannot be removed from around the substrate tube, because the tube passes through the oven. Furthermore, the substrate tube cannot be removed from the system in the middle of the process, because the glass material deposited inside the tube would be contaminated and would gather into itself moisture from the atmosphere, which would increase the attenuation of the fibre being manufactured.

Thus a CVD oven solves only some of the deficiencies of the MCVD process and creates at the same time new problems.

The purpose of the invention is to achieve a new type of solution, by means of which the problems of prior art can be avoided.

### Brief description of the invention

The apparatus according to the invention is characterized by what is disclosed in the claims.

The invention is based on research work conducted and on experience of the manufacturing of fibre preforms with an MCVD method. In the research work it was observed that uncontrolled temperature differences between the different parts of the substrate tube, length typically 1 - 1.5 m, cause unhomogeneousness in the deposited glass material. Additionally, the problems of the burning of hot parts related to rapid movement of the CVD oven were observed.

In one embodiment it is necessary to heat the substrate tube over the whole of its preform length to a temperature of 350 °C. This is difficult with the technology in use nowadays, because MCVD power sources are designed to heat a narrow area to a high temperature.

With the apparatus according to the invention it is possible to eliminate the problems related to control of the temperature of the preform tube that have troubled the MCVD method. In addition, the problem of the burning of hot parts of the oven caused by the rapid return movement of the CVD oven can be removed with the apparatus. The apparatus according to the invention improves the repeatability of the MCVD process and enables the economic use of large substrate tubes. Additionally, the invention enables the heating of a substrate tube to a higher temperature over its whole distance.

### Brief description of the figures

In the following, the invention will be described in detail by the aid of some embodiments with reference to the attached drawings, wherein:
Fig. 1 presents the principle of the deposition of glass particles subjected to thermophoresis.
Fig. 2 presents a simplified manufacturing apparatus according to one embodiment of the invention.

### Detailed description of the invention

The apparatus of invention can be utilized generally for the manufacturing of glass material and more particularly in the manufacturing of doped glass material. For example in the application disclosed in Fig. 1 and in the descriptive part of the explanation of prior art, in which thermophoresis is utilized in the manufacturing process.

In the MCVD process, raw material vapours 32 are fed into a rotating substrate tube 31. The reaction products 33 are removed from the other end of the substrate tube. Particles form in the hot zone 34 from the raw material vapours under the influence of the heat source 38. The temperature of the particles created in the part 35 of the tube immediately after the hot zone is lower than the temperature of the tube, and deposition does not occur from the effect of thermophresis. In the zone 36 in which the temperature of the particles is higher than the temperature of the tube, deposition occurs onto the walls of the tube from the effect of thermophresis 39. In the zone 37 in which the temperature of the particles is the same as the temperature of the tube, deposition occurs only from the effect of gravity.

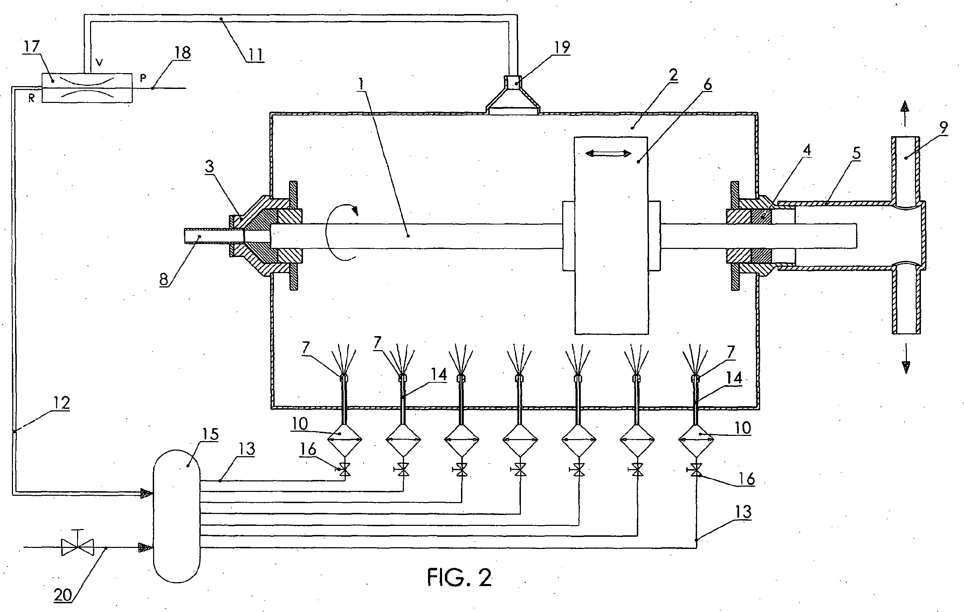

The apparatus (Fig. 2) according to the invention comprises means for leading the raw materials into the substrate tube 1 that functions as a reactor, as well as a moveable heat source 6 for heating the substrate tube 1 from the outside. The substrate tube 1 that functions as a reactor is arranged inside an essentially sealed chamber 2. The apparatus comprises means 7 for influencing the temperature of the chamber 2 by aid of a medium, at least in the proximity of the substrate tube 1 or of a part of it. The means 7, 13, 14, 15 for influencing the temperature of the chamber comprise at least one nozzle 7, with which the medium is fed into the chamber 2. The means 7, 13, 14, 15 also comprise the necessary medium pathways 13, 14 for supplying the medium of the medium source 15 and of a possible pump means from the medium source 15 to the chamber space 2, and also possible valve means 16 for opening and/or closing the medium pathway.

The means 7, 13, 14, 15 can be fitted to control the temperature in the chamber 2 over essentially the whole length of the substrate tube 1 or over a part of its length.

The means 7, 13, 14, 15 are fitted to control the temperature by aid of a medium to be heated' / cooled. According to one preferred embodiment, the means 7, 14, 15 are fitted to control the temperature by aid of a medium to be heated / cooled, which is an inert gas such as nitrogen, argon or another gas suited to the purpose. The medium source 15 can in this case be e.g. a reservoir, such as a gas bottle or corresponding, from where the gas is fed into the chamber 2.

The apparatus can comprise according to one embodiment at least one heat exchange means 10, via which the medium can be circulated.

The apparatus can typically comprise at least one medium pathway 11, 12, 13 for circulating the medium away from the chamber 2, then to the heat exchange means 10, and back to the chamber 2 again. The medium can be circulated according to one embodiment with a pump means, such as with an ejector pump 17, which is used with a pressure means, e.g. with compressed air. The suction side of the pump means 17 is connected via a medium channel 11 to the medium outlet aperture 19 of the chamber 2. The pressure side of the pump means is connected with a medium channel 12 to the medium reservoir 15, from where the medium can be fed along the medium pathways 13, 14 to a chamber 2 with at least one nozzle 7. In the embodiment of Fig. 2,the medium pathway comprises a valve means 16, such as a regulator valve, between the medium reservoir 15 and the nozzle 7 with which the feeding of medium into the chamber space 2 can be influenced. With the pipeline 20, more medium can be brought to the medium source 15, such as to a reservoir. The pipeline 20 typically comprises a shutoff valve.

According to one preferred embodiment the means 7, 13, 14, 15 for influencing the temperature of the chamber 2 comprise a series of nozzles 7, with which medium is fed into the chamber 2.

The means 7, 13, 14, 15 for influencing the temperature of the chamber comprise a series of nozzles 7, which are arranged in the chamber distributed along the length of the substrate tube 1. It can be thought that the nozzles are arranged one after the other at a distance from each other. A dedicated medium pathway 13, 14 can be led to each nozzle 7, or a number of nozzles 7 are arranged in a pipeline or corresponding that is arranged in the chamber.

In the embodiment according to Fig. 2, the medium is arranged to pass via the heat exchange means 10 before being fed into the chamber 2.

The moveable heat source is an induction oven 6 arranged in the chamber 2.

In the apparatus according to Fig. 2, the substrate tube 1 is arranged essentially inside a chamber 2 so that the substrate tube can rotate around its longitudinal axis. The tube is fixed at both its ends, or at least in the vicinity of them, to the chamber with rotating joints 3, 4. The tube can be rotated with a drive device (not presented in the figure). A medium pathway 8, such as a process tube, that brings raw material vapours is fixed to the rotating joint 3 of the inlet side, and a so-called soot box 5 is fixed to the rotating joint 4 on the outlet side, in which soot box the excess porous glass material - i.e. soot - coming from the process that has not affixed to the substrate tube collects. The excess glass material from the soot box 5 and the harmful gases generated by the process exit the medium pathway 9, e.g. to a scrubber. A vacuum can be sucked inside the substrate tube with different actuators via the soot box 5.

A heat source, such as a CVD oven 6, that moves linearly in the direction of the axis of the substrate tube 1 is inside the chamber 2, which heat source is used as a heat source in the doping process of the glass material. Typically the length of the substrate tube 1 is 1 - 1.5 metres and the length of the backwards-and-forwards distance travelled by the CVD oven 6 is of the same order of magnitude. The speed of motion of the CVD oven is typically 100 - 200 mm/min when doping glass material and 5 - 50 mm/min when collapsing a doped fibre preform.

The apparatus comprises means for influencing the temperature of the chamber 2, more particularly for influencing the temperature of the substrate tube 1 or at least of a part of it. According to one embodiment of the invention, the means for influencing the temperature comprise means for feeding a medium into the chamber. Typically the means comprise at least one nozzle 7, which when activated is fitted to feed medium into the chamber. In the embodiment of Fig. 2, a series of nozzles 7 are arranged in the chamber 2 for essentially the length of the substrate tube 1. Medium, more particularly gas, can be fed into the chamber 2 from the nozzle 7. The medium, more particularly gas, can be fitted to pass via at least one heat exchange means 10 before its arrival at a nozzle 7. The medium, more particularly gas, fed into the chamber heats or cools the substrate tube 1 in order to achieve the desired temperature. The heat exchange means can be e.g. a vortex tube, with which the medium can be cooled. Conversely, the heat exchange means can be a means with which the medium is heated. At least one pyrometer is disposed in the chamber 2 to measure the temperature of the substrate tube 1 at different points and in addition the induction oven 6 contains a pyrometer that measures the temperature of the substrate tube inside the oven. Thus the temperature profile of the length of the substrate tube is known.

In the normal preforming process of the glass material it is important to keep the temperature of the substrate tube 1 constant so that the difference between the temperature of the section of tube 1 inside the oven 6 and the temperature of the section of tube at the front part of the oven is constant. In this case gas of the desired temperatures is supplied from the nozzles at different points in the axial direction of the tube, so that temperature differences cannot arise along the distance of the length of the tube.

In one preferred embodiment the gas supplied from the nozzle 7 is inert gas such that the inert gas leaving the top part of the chamber circulates back to the heat exchange means and returns to the chamber via the nozzles at the correct temperature. Thus the process can be placed into a totally inert environment at a very favourable cost.

When a CVD oven operates in an inert environment, it can run a process inside the chamber at a very high speed (1 - 10 m/min) without air penetrating to the hot parts of the oven and causing burning of the parts. That being the case, with the arrangement according to the invention the oven can be returned after the deposition layer to the start position and thus the length of the so-called ramp at the start end of the fibre preform can be shortened. A ramp is that part of the fibre preform, along the distance of which the refractive index profile is not of the type desired and which is not good enough to be drawn into fibre. A fast return movement of the oven is important in shortening ramps.

In one embodiment it is necessary to bring the whole substrate tube to an even and rather low temperature of 300 - 400 degrees. In this embodiment a rapid-movement oven can be used for heating the different points of the substrate tube according to what is needed on the basis of the temperature measurement data. It is obvious to the person skilled in the art that this can be done programmatically by moving a suitably heated oven to different points of the substrate tube at different speeds and keeping it in its position for the desired time. When the temperature of the tube is close to that desired, the temperature can be maintained and finely regulated by controlling the temperatures and volume flow rates of the gas flows. Thus the substrate tube can be kept for a long time at precisely the correct temperature according to the needs of the application.

It is obvious to the person skilled in the art that the invention is not limited to the embodiments presented above, but that it can be varied within the scope of the claims presented below.

## Claims

1. Apparatus for manufacturing glass material, which apparatus comprises means for leading the raw materials into a substrate tube (1) that functions as a reactor, as well as a moveable heat source (6) for heating the substrate tube (1) from the outside, **characterized in that** a substrate tube (1) that functions as a reactor and the heat source (6) are arranged inside a sealed chamber (2), and **in that** the apparatus comprises means (7, 13, 14, 15) for influencing the temperature in the chamber (2) by the aid of gas, led inside the sealed chamber (2).

2. Apparatus according to claim 1, **characterized in that** the means (7, 13, 14, 15) for influencing the temperature in the chamber comprise at least one nozzle (7), with which gas is fed into the chamber (2).

3. Apparatus according to claim 1 or 2, **characterized in that** means (7, 13, 14, 15) are fitted for influencing the temperature in the chamber (2) over essentially the whole length of the substrate tube (1) or over a part of its length.

4. Apparatus according to any of claims 1 - 3, **characterized in that** means (7, 13, 14, 15) are fitted to control the temperature in the chamber by the aid of gas.

5. Apparatus according to any of claims 1 - 4, **characterized in that** means (7, 13, 14, 15) are fitted to control the temperature in the chamber by the aid of gas, which is an inert gas such as nitrogen, argon or another gas suited to the purpose.

6. Apparatus according to any of claims 1 - 5, **characterized in that** the apparatus comprises at least one heat exchange means (10), via which gas can be circulated.

7. Apparatus according to any of claims 1 - 6, **characterized in that** the apparatus comprises at least one gas pathway (11, 12, 13) for circulating gas away from the chamber to the heat exchange means (10) and back to the chamber again.

8. Apparatus according to any of claims 1 - 7, **characterized in that** the means (7, 13, 14, 15) for influencing the temperature in the chamber comprise a series of nozzles (7), with which gas is fed into the chamber (2).

9. Apparatus according to any of claims 1 - 8, **characterized in that** the means (7, 13, 14, 15) for influencing the temperature in the chamber comprise a series of nozzles (7), which are arranged in the chamber distributed along the length of the substrate tube (1).

10. Apparatus according to any of claims 1 - 9, **characterized in that** the moveable heat source is an induction oven (6) arranged in the chamber (2).

## Patentansprüche

1. Vorrichtung zur Herstellung von Glasmaterial, wobei die Vorrichtung Mittel zum Führen der Rohmaterialien in ein Substratrohr (1), das als ein Reaktor wirkt, sowie eine bewegliche Heizquelle (6) zum Erhitzen des Substratrohrs (1) von der Außenseite umfasst, **dadurch gekennzeichnet, dass** ein Substratrohr (1), das als ein Reaktor wirkt, und die Heizquelle (6) innerhalb einer abgedichteten Kammer (2) angeordnet sind, und dadurch, dass die Vorrichtung Mittel (7, 13, 14, 15) zum Beeinflussen der Temperatur in der Kammer (2) mit Hilfe von Gas, das in die abgedichtete Kammer (2) eingeführt wird, umfasst.

2. Vorrichtung nach Anspruch 1, **dadurch gekennzeichnet, dass** die Mittel (7, 13, 14, 15) zum Beeinflussen der Temperatur in der Kammer mindestens eine Düse (7), mit welcher Gas in die Kammer (2) eingespeist wird, umfassen.

3. Vorrichtung nach Anspruch 1 oder 2, **dadurch gekennzeichnet, dass** Mittel (7, 13, 14, 15) zum Beeinflussen der Temperatur in der Kammer (2) über im Wesentlichen die gesamte Länge des Substratrohrs (1) oder über einen Teil seiner Länge angebracht sind.

4. Vorrichtung nach einem der Ansprüche 1-3, **dadurch gekennzeichnet, dass** Mittel (7, 13, 14, 15) zum Steuern der Temperatur in der Kammer mit Hilfe von Gas angebracht sind.

5. Vorrichtung nach einem der Ansprüche 1-4, **dadurch gekennzeichnet, dass** Mittel (7, 13, 14, 15) zum Steuern der Temperatur in der Kammer mit Hilfe von Gas angebracht sind, welches ein Inertgas, wie Stickstoff, Argon oder ein anderes für den Zweck geeignetes Gas, ist.

6. Vorrichtung nach einem der Ansprüche 1-5, **dadurch gekennzeichnet, dass** die Vorrichtung mindestens ein Wärmetauschmittel (10), über welches Gas im Umlauf geführt werden kann, umfasst.

7. Vorrichtung nach einem der Ansprüche 1-6, **dadurch gekennzeichnet, dass** die Vorrichtung mindestens einen Gasweg (11, 12, 13) zum Umlauf von Gas weg von der Kammer zu dem Wärmetauschmittel (10) und wieder zurück zur Kammer umfasst.

8. Vorrichtung nach einem der Ansprüche 1-7, **dadurch gekennzeichnet, dass** die Mittel (7, 13, 14, 15) zum Beeinflussen der Temperatur in der Kammer eine Reihe von Düsen (7) umfassen, mit welchen Gas in die Kammer (2) eingespeist wird.

9. Vorrichtung nach einem der Ansprüche 1-8, **dadurch gekennzeichnet, dass** die Mittel (7, 13, 14, 15) zum Beeinflussen der Temperatur in der Kammer eine Reihe von Düsen (7) umfassen, welche in der Kammer entlang der Länge des Substratrohrs (1) verteilt angeordnet sind.

10. Vorrichtung nach einem der Ansprüche 1-9, **dadurch gekennzeichnet, dass** die bewegliche Heizquelle ein in der Kammer (2) angeordneter Induktionsofen (6) ist.

## Revendications

1. Appareil pour la fabrication d'un matériau à base de verre, lequel appareil comprend un moyen pour diriger les matières premières dans un tube de substrat (1) qui fonctionne comme un réacteur, ainsi qu'une source de chaleur mobile (6) pour chauffer le tube de substrat (1) depuis l'extérieur, **caractérisé en ce qu'**un tube de substrat (1) qui fonctionne comme un réacteur et la source de chaleur mobile (6) sont disposés à l'intérieur d'une chambre scellée (2), et **en ce que** l'appareil comprend des moyens (7, 13, 14, 15) pour agir sur la température dans la chambre (2) à l'aide de gaz, conduit à l'intérieur de la chambre scellée (2).

2. Appareil selon la revendication 1, **caractérisé en ce que** les moyens (7, 13, 14, 15) pour agir sur la température dans la chambre comprennent au moins un embout (7), avec lequel le gaz est introduit dans la chambre (2).

3. Appareil selon la revendication 1 ou 2, **caractérisé en ce que** les moyens (7, 13, 14, 15) sont ajustés pour influencer la température dans la chambre (2) sur essentiellement toute la longueur du tube de substrat (1), ou sur une partie de sa longueur.

4. Appareil selon l'une quelconque des revendications 1 à 3, **caractérisé en ce que** les moyens (7, 13, 14, 15) sont ajustés pour contrôler la température dans la chambre à l'aide de gaz.

5. Appareil selon l'une quelconque des revendications 1 à 4, **caractérisé en ce que** les moyens (7, 13, 14, 15) sont ajustés pour contrôler la température dans la chambre à l'aide de gaz, lequel est un gaz inerte tel que l'azote, l'argon ou un autre gaz adapté pour l'objectif.

6. Appareil selon l'une quelconque des revendications 1 à 5, **caractérisé en ce que** l'appareil comprend au moins un moyen d'échange de chaleur (10), par lequel le gaz peut circuler.

7. Appareil selon l'une quelconque des revendications 1 à 6, **caractérisé en ce que** l'appareil comprend au moins une voie de gaz (11, 12, 13) pour que le gaz circule hors de la chambre jusqu'au moyen d'échange de chaleur (10), puis retourne à nouveau dans la chambre.

8. Appareil selon l'une quelconque des revendications 1 à 7, **caractérisé en ce que** les moyens (7, 13, 14, 15) pour agir sur la température dans la chambre comprennent une série d'embouts (7), avec lesquels le gaz est introduit dans la chambre (2).

9. Appareil selon l'une quelconque des revendications 1 à 8, **caractérisé en ce que** les moyens (7, 13, 14, 15) pour agir sur la température dans la chambre comprennent une série d'embouts (7), qui sont disposés dans la chambre en étant distribués sur la longueur du tube de substrat (1)

10. Appareil selon l'une quelconque des revendications 1 à 9, **caractérisé en ce que** la source de chaleur mobile est un four à induction (6) disposé dans la chambre (2).
